# EUROPEAN PATENT APPLICATION

(11) **EP 0 680 197 A2**
(43) Date of publication of application: **02.11.1995**
(21) Application number: 95106177.9
(22) Date of filing: 25.04.1995
(51) Int. Cl.: H04N 1/46

(54) **Color image forming apparatus**

(30) Priority: 25.04.1994 JP 86179/94
(71) Applicant: MITA INDUSTRIAL CO. LTD., Osaka-shi Osaka 540 (JP)
(72) Inventor: Fujimoto, Masaya, c/o Mita Industrial Co., Ltd., Osaka-shi, Osaka 540 (JP); Yamamoto, Haruo, c/o Mita Industrial Co., Ltd., Osaka-shi, Osaka 540 (JP); Amakawa, Katsumi, c/o Mita Industrial Co., Ltd., Osaka-shi, Osaka 540 (JP)
(74) Representative: Patentanwälte Beetz - Timpe - Siegfried Schmitt-Fumian - Mayr

(57) **Abstract**

The memory area of an image memory 3 is divided into a plurality of areas (PL0 - PL3) for separetely storing yellow, magenta, cyan and block data constituting a full color image, and the stored color data are read out to form a full color image 3a on a sheet of paper. In forming a mono color image, mono color data are stored in the entire memory area. An image forming apparatus is thus realized which is capable of arbitrarily composing images with a small memory capacity.

## Description

### BACKGROUND OF THE INVENTION

### Field of the Invention

The present invention relates to a color image forming apparatus, and more particularly, to a color image forming apparatus such as a digital color electrographic copying machine which forms a full color image by performing a printing operation a plurality of times.

### Description of the Prior Art

In a digital full color electrographic copying machine, since the development and printing of a color image read out through scanning by a scanner are separately performed for each of magenta (M), cyan (C), yellow (Y) and black (BK), development and printing are performed four times for one image. Further, such an electrographic copying machine has an image memory for temporarily storing image data obtained by scanning. In this case, some high grade copying machines have memories specifically used for magenta, cyan, yellow and black, respectively. However, many other machines have one memory common to the four colors (magenta, cyan, yellow and black).

In the former copying machine, if the memory is for an A3 size transfer sheet, since 32 megabytes are necessary per color, 128 megabytes are necessary for four colors. Such a large memory capacity increases the price of the machine. In the latter type, since only one memory is provided, the memory capacity is one-fourth compared to the former one. However, in the latter type, since the contents of the memory are successively rewritten per color, it is impossible to keep information on all the four colors. For this reason, the copying machine of this type can have neither a function to compose colors nor a function to copy an original to compose the original image and an image of a color stored in the memory.

### SUMMARY OF THE INVENTION

An object of the present invention is to provide an image forming apparatus capable of arbitrarily composing images with a small memory capacity.

To achieve the above-mentioned object, in a color image forming apparatus of the present invention, a memory area of an image memory is divided into a plurality of areas for separately storing a plurality of primary color data constituting a full color image, and the stored primary color data are read out to form a full color image on a sheet of paper.

More specifically, an image forming apparatus includes a scanner unit for reading out an image, a color selecting circuit which selects one by one the plurality of primary color data obtained based on an output of the scanner unit and outputs the selected data, writing controlling means for writing an output data of the color selecting circuit to an allotted predetermined area of the image memory, reading out controlling means for successively reading out the primary color data from the image memory, and a printer unit which forms a full color image by forming images one on another on a sheet of paper with toner of colors corresponding to the priory color image data read out from the image memory.

Alternately, a color image forming apparatus may include a scanner unit for reading out an image, writing controlling means for writing a plurality of primary color data obtained based on an output of the scanner unit to allotted predetermined areas of the image memory, reading out controlling means for successively reading out the primary color data from the image memory, a color selecting circuit which selects one by one the primary color data read out from the image memory and outputs the selected data, and a printer unit which forms a full color image by forming images one on another on a sheet of paper with toner of colors corresponding to the priory color image data outputted from the color selecting circuit.

Moreover, a color image forming apparatus of the present invention is provided with an access signal producing means for producing an area selecting signal and an address signal for accessing each of the plurality of areas of a memory area of an image memory, and controlling means for controlling the access signal producing means so that the plurality of primary color data are separately stored in the areas in a full color image forming mode and for controlling the access signal producing means so that a mono color image data is stored in the entire area of the image memory in a mono color forming mode.

According to such features, for example, when the image memory has a memory capacity corresponding to A4 size, in the case of a digital color electrographic copying machine, the memory area is divided into four areas for storing the magenta, cyan, yellow and black primary color data, so that a full color image corresponding to A6 size (postcard size) in sheet size is formed. Since the primary color data can be kept in the memory until at least the next one image is formed, the image can be composed with another image.

### BRIEF DESCRIPTION OF THE DRAWINGS

This and other objects and features of this invention will become clear from the following description, taken in conjunction with the preferred embodiments with reference to the accompanied drawings in which:
Fig. 1 is a conceptional view of a color image forming apparatus of the present invention;
Fig. 2 is a block diagram of a digital color electrographic copying machine embodying the present invention;
Fig. 3 is a block diagram of a memory circuit of the copying machine;
Fig. 4 is a view showing an example of division of the memory area in the mono color mode in the second embodiment;
Fig. 5 is a view showing an example of division of the memory area in the full color mode in the second embodiment;
Fig. 6 is a block diagram of another embodiment of a digital color electrographic copying machine embodying the present invention;
Fig. 7 is a block diagram of a memory circuit of the copying machine;
Fig. 8 is a schematic view of a full color electrographic copying machine employing the present invention; and
Fig. 9 is a view showing a relationship between a transferring drum and transfer sheets in the copying machine.

### DESCRIPTION OF THE PREFERRED EMBODIMENTS

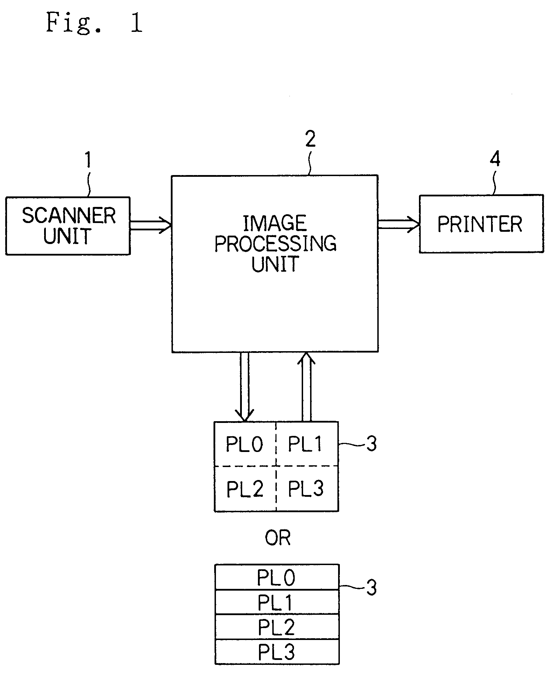

Referring to Fig. 1, there is shown a conceptional view of the present invention. Reference numeral 1 represents a scanner unit. Reference numeral 2 represents an image processing unit for processing an image read out by the scanner unit. Reference numeral 3 represents an image memory. Reference numeral 4 represents a printer unit. In a full color mode, the memory area of the memory 3 is divided into four areas for storing data on magenta, cyan, yellow and black, respectively. Here, dividing the memory area is not dividing it physically but dividing it by an address control. When the capacity of the memory 3 corresponds to A4 size, since one-fourth the capacity corresponds to A6 size, a full color image is formed on an A6 size (postcard size) sheet. In a mono color mode, since a mono color image data is stored in the entire area of the memory 3, an A4 size image is formed.

As described later, in the present invention, there are two embodiments having different operation methods. In the first embodiment, to form a full color image, scanning for image reading is performed four times by the scanner unit 1, and each time, data is written to one of the memory areas PL1 to PL4.

In the second embodiment, the scanning for image reading by the scanner unit 1 is performed only once even in the full color mode, and the image data read out through the single scanning is simultaneously written to the areas PL1 to PL4 of the memory 3. In both the first and second embodiments, the development and printing by the printer unit 4 are performed four times. In the mono color mode, the scanning and the development and printing are performed once in both embodiments.

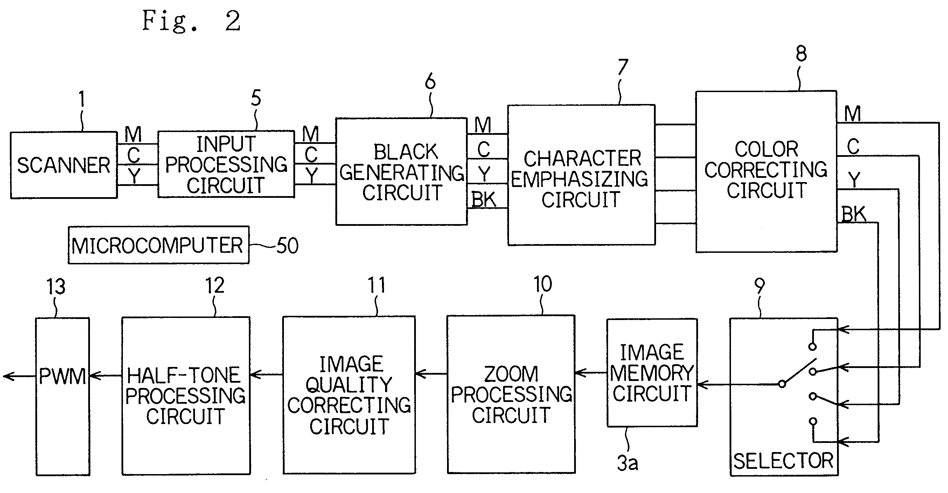

Subsequently, the first and second embodiments will be successively described. First, the first embodiment will be described with reference to Figs. 2 to 5. Referring to Fig. 2, there are shown the details of the image processing unit 2, and the scanner unit 1 and an image memory circuit 3a. The scanner unit 1 separates the image data read out from an original into data on three primary colors of light and converts the data into data M, C and Y of three primary colors of toner.

An input processing circuit 5 performs processing such as frequency conversion on the image data M, C and Y. Based on the processed image data M, C and Y, a black generating circuit 6 generates a black data BK. The image data in which the black data is generated is character-emphasized by a character emphasizing circuit 7, and then color-corrected according to the toner by a color correcting circuit 8.

Reference numeral 9 represents a selector which selects the four color data M, C, Y and BK one by one to supply them to the image memory 3. The selection is made in the order of the data M, C, Y and BK although not limited thereto. After written in a predetermined one-fourth area of the image memory 3 in the image memory circuit 3a, the selected image data is read out, enlarged/reduced by a zoom processing circuit 10, differentiated/integrated by an image correcting circuit 11, half-tone processed by a half tone processing circuit 12, and then outputted as a video signal (pulse) by a pulse width modulating circuit 13. The video signal is supplied to the printer unit 4 of Fig. 1. In Fig. 2, reference numeral 50 represents a microcomputer which controls the elements shown in Fig. 2.

In the first embodiment, since the selector 9 is arranged in front of the memory circuit 3a, the image data is supplied to the memory circuit 3a only one color at a time. Therefore, the image reading operation by the scanner unit 1 is performed four times for one image, and the processing by each element shown in Fig. 2 is performed for one color at a time (therefore, for one of magenta, cyan, yellow and black at a time). Likewise, the printer unit 4 (Fig. 1) which operates on an output from the pulse width modulating circuit 13 performs development and printing for one color at a time.

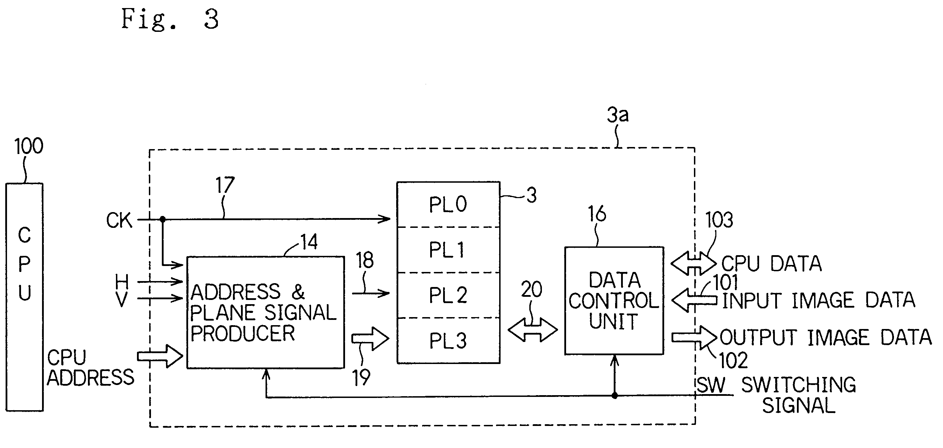

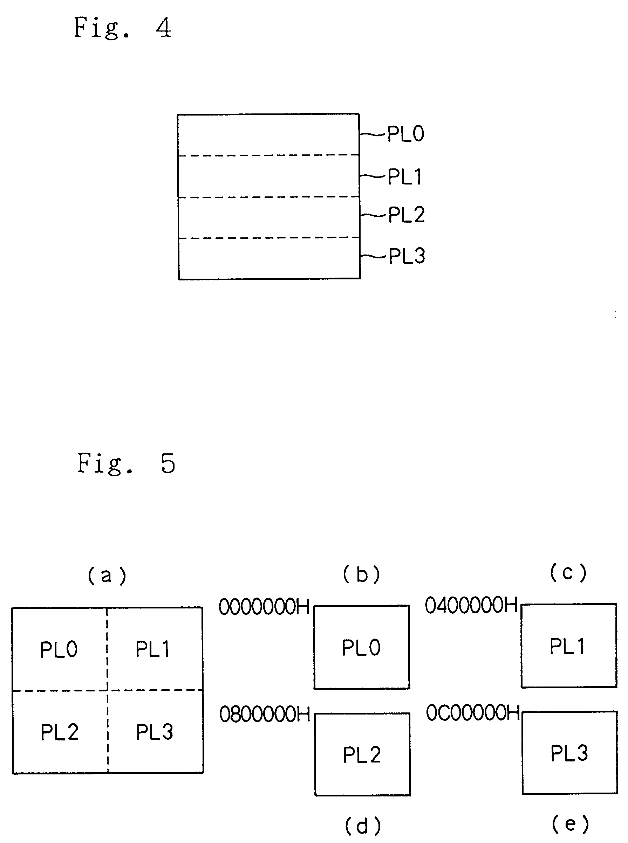

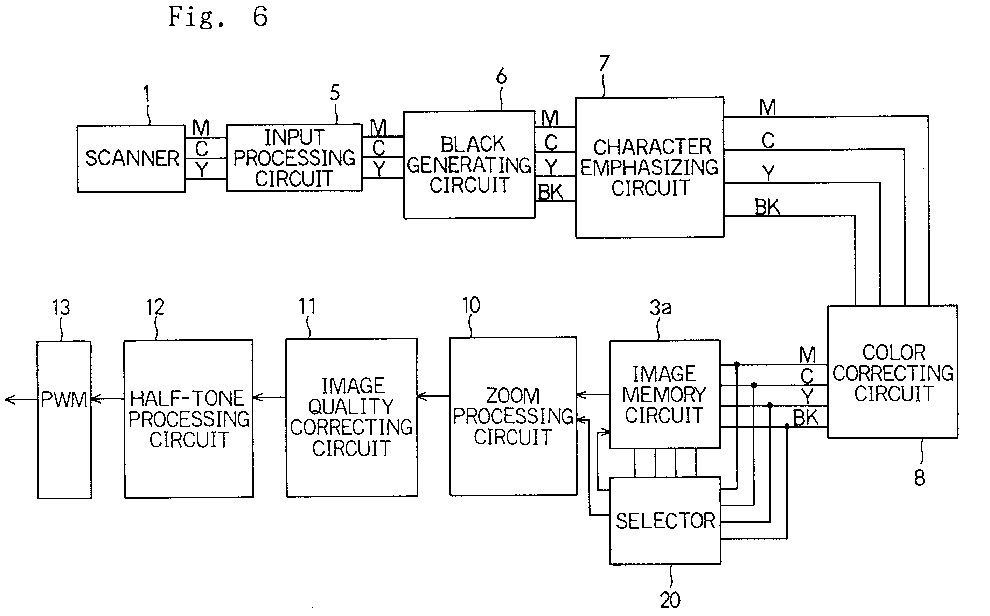

Referring to Fig. 3, there are shown the details of the image memory circuit 3a. The image memory circuit 3a is controlled by a central processing unit (CPU) 100 of the microcomputer 50. The memory 3 is divided into four area. In the mono color mode, it is divided vertically as shown in Figs. 3 and 4. In the full color mode, it is divided horizontally and vertically as shown in Fig. 5. The areas PL0 to PL3 will hereinafter be referred to as planes.

In Fig. 3, CK represents a transfer clock supplied through a line 17 from an image processing clock generating circuit (not shown). Reference numeral 14 represents an address signal and plane selecting signal producer which produces a plane selecting signal and an address selecting signal based on the clock CK, a horizontal synchronizing signal H, a vertical synchronizing signal V and an address data (CPU address) from the CPU 100. The horizontal synchronizing signal H is supplied from the printer unit 4 and the vertical synchronizing signal V is supplied from the scanner unit 1. The plane selecting signal is outputted to a line 18. The address signal is outputted to an address bus 19. The address signal is represented by 20 bits A21 to A0 in accordance with the address bus of the CPU. The plane selecting signal is represented by 2 bits A23 and A22 in accordance with the address bus of the CPU.

In the mono color mode, a linear address signal is produced based on the horizontal synchronizing signal H and the clock CK with the vertical synchronizing signal V as a reference. The plane selecting signal is produced to be linear by counting the horizontal synchronizing signal H with the vertical synchronizing signal V as a reference. The plane selecting signal and the address signal in the mono color mode are as shown below. 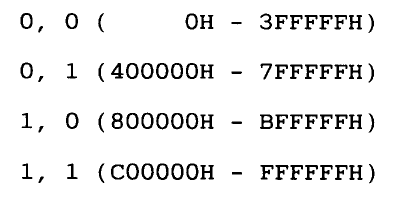
where 0, 0 represents the plane PL0, 0, 1 represents the plane PL1, 1, 0 represents the plane PL2, and 1, 1 represents the plane PL3.

In the full color mode where scanning is performed four times, by counting the horizontal synchronizing signal H with the vertical synchronizing signal V as a reference, a linear address signal is produced, and by counting the vertical synchronizing signal V, the plane selecting signal is produced. The relationship between the plane selecting signal and the address selecting signal, and color scanning in the full color mode is as shown below. 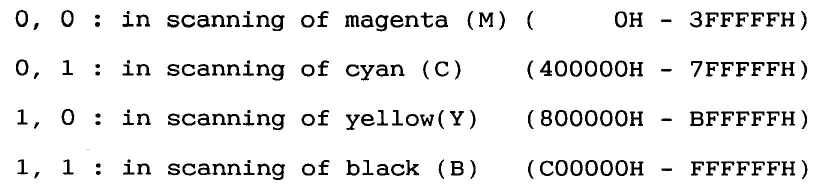
Returning to Fig. 3, reference numeral 16 represents a data control circuit which makes switching between input and output of image data to and from the memory 3 and switching between an input/output mode of these image data and a data communication mode with the CPU 100. These switchings are made based on a switching signal SW from the CPU 100. Reference numeral 20 represents a data bus coupled to the memory 3. Reference numeral 103 represents a bus which serves as a line for CPU data when image data from the CPU 100 are written to or read out from the memory 3. Reference numeral 101 represents an input image data bus to which image data obtained by the scanner unit 1 are supplied after various processings are applied thereto. Reference numeral 102 represents an output image data bus for output image from the memory 3. The buses 101, 102 and 103 are selectively coupled to the data bus 20 through the data control unit 16.

Referring now to Figs. 6 and 7, the second embodiment of the present invention will be described. In the second embodiment, the memory circuit 3a is arranged on the succeeding stage of the color selecting circuit 20 in the mono color mode and on the preceding stage of the color selecting circuit 20 in the full color mode. Therefore, in the mono color mode, one of the data M, C, Y and BK from the color correcting circuit 8 is selected and written in the memory 3, and the output read out from the memory 3 is directed to the zoom processing circuit 10. In the full color mode, the data M, C, Y and BK from the color correcting circuit 8 are simultaneously written in the memory 3 and one of the outputs from the memory 3 is selected by the selecting circuit and directed to the zoom processing circuit 10.

Referring to Fig. 7, there are shown the details of the memory circuit 3a including the memory 3. Reference numeral 21 represents a first signal producer which produces a plane address signal and a read/write signal. Reference numeral 22 represents a second signal producer which produces a plane selecting signal, a mode control signal and a bus switching signal. Reference numerals 23 to 26 represent plane signal control circuits. The plane signal control circuit 23 is for the plane PL0. The plane signal control circuit 24 is for the plane PL1. The plane signal control circuit 25 is for the plane PL2. The plane signal control circuit 26 is for the plane PL3.

The plane signal control circuits 23 to 26 supply the plane address signals to the planes as they are. However, in the full color mode, since the image data are simultaneously inputted in the planes PL0 to PL3, the address signals of the four colors are simultaneously supplied, and in the mono color mode, since the image data are inputted to the planes in the order of the planes PL0, PL1, PL2 and PL3, the address signals are supplied in the same order.

Thus, the plane signal control circuits supply the address signals and the read/write signals to the planes PL0 to PL3 of the memory. Likewise, plane data bus control circuits 27 to 30 which control the data buses so that the data buses of all the planes are simultaneously activated in the full color mode and that the data buses are activated one by one in the mono color mode are shown on the right side of Fig. 7.

When the data buses are activated one by one, they are successively activated according to the plane selecting signal. When the memory is accessed by the CPU, since the plane selecting signal is produced according to the address signal of the CPU, the data buses are activated by the plane selecting signal.

Reference numerals 31 to 34 represent address buses for the planes PL0, PL1, PL2, and PL3, respectively. Reference numerals 39 to 42 represent data buses for the planes PL0, PL1, PL2, and PL3, respectively. Reference numeral 43 represents an address bus produced in the planes.

S0 to S3 represents read/write signals and plane selecting signals for the planes PL0, PL1, PL2, and PL3, respectively. S5 represents a normal read/write signal produced before the selection is made. S6 to S9 represent selecting signals for the planes PL0, PL1, PL2, and PL3 and bus switching signals for making a selection between parallel and serial data transfer according to whether the mode is the full color mode or the mono color mode.

Hereinafter, an operation in the second embodiment will be described. In the mono color mode, the horizontal synchronizing signal H and the clock CK are counted with the vertical synchronizing signal V as a reference to produce a linear address signal as shown below. S6, S7, S8 and S9 represent first, second, third and fourth plane selecting signals, and a plane selecting signal is selected according to the plane.

| | 0-3FFFFFH | 400000H-7FFFFFH | 800000H-BFFFFFH | C00000H-FFFFFFH |
|---|---|---|---|---|
| S6 | ○ | x | x | x |
| S7 | x | ○ | x | x |
| S8 | x | x | ○ | x |
| S9 | x | x | x | ○ |

The switching of the address bus is controlled so that the read/write signal and the address signal is supplied according to the selection of the plane selecting signal. The switching of the data bus is controlled in the same manner. Thus, mono color data selected by the color selecting circuit 20 are written in the four planes one by one, and one image is formed by the four planes. The color selecting circuit 20 may be designed to compare for each dot the values of the three primary color data obtained by the scanner unit to select the highest one and supply it to the memory as a mono color data.

In the full color mode, like in the mono color image formation, the horizontal synchronizing signal H and the clock CK are counted with the vertical synchronizing signal V as a reference to produce a linear address signal. The address signal is common to the four planes as shown below.

| | 0-#FFFFFH |
|---|---|
| S6 | ○ |
| S7 | ○ |
| S8 | ○ |
| S9 | ○ |

As is apparent from this table, all the selecting signals are selected in the full color mode. Also, the address and read/write data bus, and the data buses are all activated. Thus, the data M, C, Y and BK are simultaneously written in all the planes.

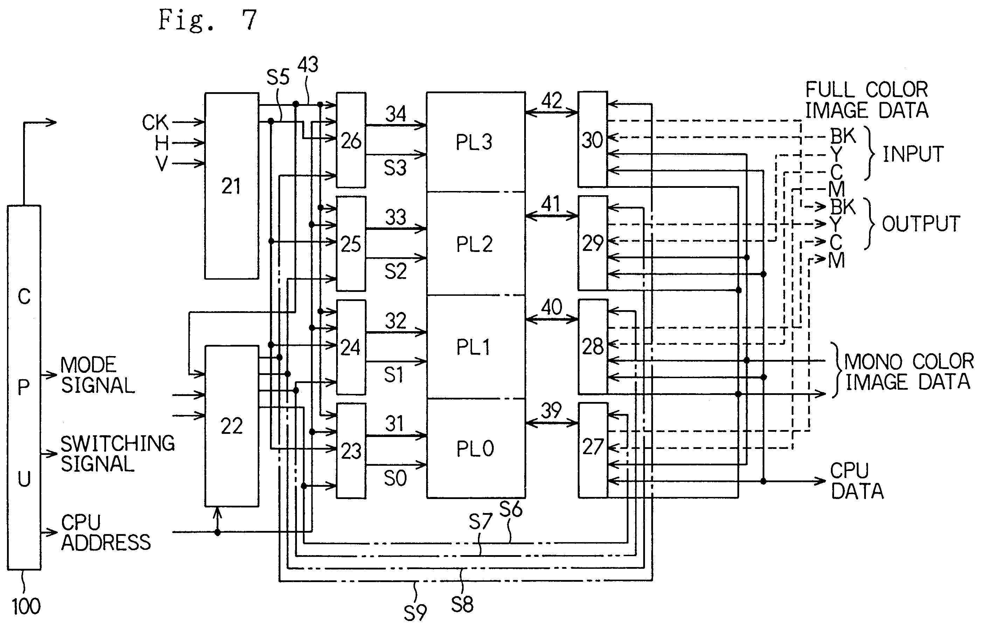

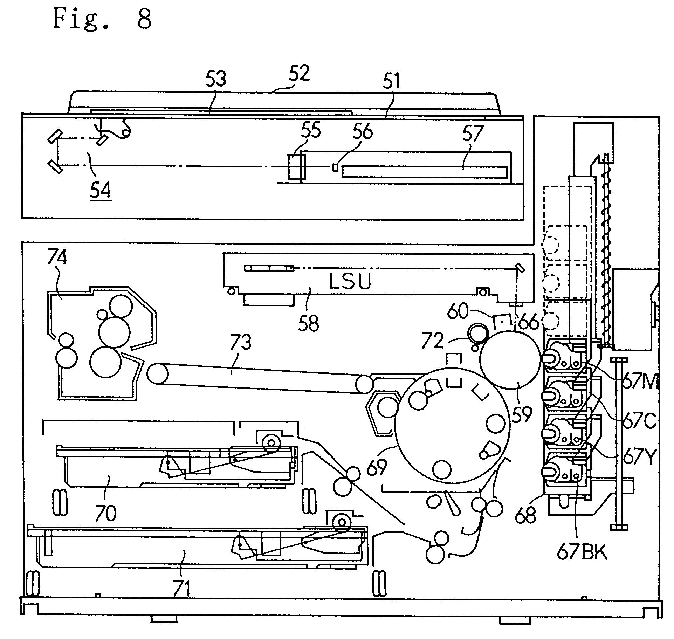

Referring to Fig. 8, there is schematically shown a digital full color electrographic copying machine employing the present invention. An image of an original 53 placed on a contact glass 51 while being pressed by an original cover 52 is scanned by a scanning optical system 54. The image information is directed from a condenser lens 55 to a light receiving device 56 such as a charge coupled device (CCD) (the elements 54, 55 and 56 constitute the scanner unit 1 of Fig. 1) through light serving as a medium. After converted into an electric signal, the image information is processed by an image processing circuit 57 (corresponding to the image processing unit 2 of Fig. 1) and then is formed into a latent image on a photoreceptor drum by a laser scanner unit 58. Prior to the formation of the latent image, the surface of the photoreceptor drum 59 is charged by a main charger 60.

To form a full color image, first, a latent image is formed on the photoreceptor drum 59 by means of a laser beam 66 based on a magenta color image data and the latent image is developed by an magenta developer unit 67M. The magenta developer unit 67 contains magenta toner and develops the latent image on the photoreceptor drum 59 with the magenta toner. Then, the image on the photoreceptor drum 59 developed with the magenta toner is transferred onto a sheet arranged to wind around a transferring drum 69. The sheet is supplied by way of a paper feeding path from a paper feeding cassette 70 or 71.

The sheet remains on the surface of the transferring drum after the magenta image has been transferred thereonto so that an image of another color is transferred thereonto. The residual toner and charge on the photoreceptor drum 59 are removed by a cleaner 72 and a charge remover (not shown), and the photoreceptor drum 59 is again charged by the main charger 60. Then, a latent image corresponding to a cyan image formed on the photoreceptor drum by means of the laser beam 66 for forming a latent image based on a cyan image data is developed by a cyan developer unit 67C. At this time, the cyan developer unit 67C is brought to a position opposite to the photoreceptor drum 59 in place of the magenta developer unit 67M.

In this embodiment, as shown in the figure, the magenta developer unit 67M for the development of magenta images, the cyan developer unit 67C for the development of cyan images, a yellow developer unit 67Y for the development of yellow images and the black developer unit 67BK for the development of black images are subsequently attached in a vertical direction onto a moving member 68 which moves vertically. These developer units are alternatively brought to a development position (the position opposite to the photoreceptor drum 59) in correspondence with the color image data used for forming a latent image by means of the laser beam 66.

The image on the photoreceptor drum 59 developed with the cyan toner is transferred onto the sheet (the sheet where the magenta image has been transferred) on the transferring drum 69. Yellow and black images are transferred to the sheet by repeating similar operations to form a full color image. Then, the sheet on which the full color image has been formed is separated from the transferring drum 69 and the image is fixed by a fixer 74. Then, the sheet is discharged from the electrographic copying machine.

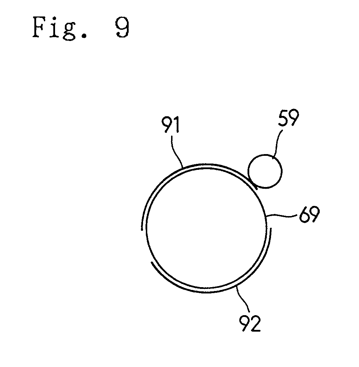

Since two A4 size sheets can be wound around the transferring roller 69 as shown in Fig. 9, in the mono color mode, two copies can be obtained when the A4 size sheets are used.

As described above, according to the present invention, the memory area of the image memory is divided, for example, into four areas for storing magenta (M), cyan (C), yellow (Y) and black(BK) data, so that a full color image of a sheet size corresponding to one-fourth of the memory capacity of the image memory is formed. Further, since the data can be kept in the memory at least until the next one image is formed, the image can be edited and composed with another image. In addition, the mono color image can be formed in a size corresponding to the memory capacity of the image memory at its maximum.

Obviously, many modifications and variations of the present invention are possible in light of the above teachings. It is therefore to be understood that within the scope of the appended claims, the invention may be practiced other than as specifically described.

## Claims

1. A color image forming apparatus wherein a memory area of an image memory (3) is divided into a plurality of areas (PL1-PL4) for separately storing a plurality of primary color data constituting a full color image, and the stored primary color data are read out to form a full color image on a sheet of paper.

2. A color image forming apparatus according to claim 1, comprising:
a scanner unit (1) for reading out an image;
a color selecting circuit (9) which selects one by one the plurality of primary color data obtained based on an output of the scanner unit (1) and outputs the selected data;
writing controlling means for writing an output data of the color selecting circuit (9) to an allotted predetermined area of the image memory (3a);
reading out controlling means for successively reading out the primary color data from the image memory; and
a printer unit (4) which forms a full color image on a sheet of paper by overlapping images of colors corresponding to the primary color data outputted from the color selecting circuit with toner of colors corresponding to the primary color data.

3. A color image forming apparatus according to claim 1, comprising:
a scanner unit (1) for reading out an image;
writing controlling means for writing a plurality of primary color data obtained based on an output of the scanner unit (1) to allotted predetermined areas of the image memory;
reading out controlling means for successively reading out the primary color data from the image memory;
a color selecting circuit (9) which selects one by one the primary color data read out from the image memory (3) and outputs the selected data; and
a printer unit (4) which forms a full color image on a sheet of paper by overlapping images of colors corresponding to the primary color data outputted from the color selecting circuit with toner of colors corresponding to the primary color data.

4. A color image forming apparatus comprising:
an access signal producing means for producing an area selecting signal and an address signal for accessing each of the plurality of areas (PL0-PL3) of a memory area of an image memory (3a); and
controlling means for controlling the access signal producing means so that a plurality of primary color data are separately stored in the areas in a full color image forming mode and for controlling the access signal producing means so that a mono color image data is stored in the entire area of the image memory (3a) in a mono color forming mode.
